# EUROPEAN PATENT SPECIFICATION

(11) **EP 0 813 066 B1**
(45) Date of publication and mention of the grant of the patent: **23.10.2002**
(21) Application number: 97610022.2
(22) Date of filing: 04.06.1997
(51) Int. Cl.: G01P 13/02, G01P 1/00, G01P 13/04

(54) **A device for indicating wind**
Windanzeiger
Indicateur du vent

(30) Priority: 10.06.1996 DK 1900596 U
(43) Date of publication of application: 17.12.1997
(73) Proprietor: Therkildsen, Niels Jörgen, 9352 Dybvad (DK); Therkildsen, Per Sören, 9750 Östervra (DK)
(72) Inventor: Therkildsen, Niels Jörgen, 9352 Dybvad (DK); Therkildsen, Per Sören, 9750 Östervra (DK)
(74) Representative: Olsen, Peter Vestergaard

(56) References cited:
- AT-B- 298 115
- GB-A- 2 143 328
- GB-A- 2 156 531
- GB-A- 2 189 663

## Description

The invention concerns a device for indicating wind and comprises a stationary housing which at one end has a wind sensor mounted on a rotatable shaft extending into the housing and provided with indicating means to interact with one or more signal emitters for transmitting a signal to a sensing system outside the housing, thereby indicating the position, the movements, or the rotational speed of the wind sensor relative to the housing, and where the emitters or wires for the emitters are passed into the end of the housing opposite to the wind sensor. An electrical signal emitter can be used in connection with the device.

Such wind indicating means are commonly known, cf. as an example US patent 3,316,761, and are used for measuring wind velocity by means of wind cups or the direction of the wind by means of a wind vane. For registrering the speed of rotation or the approximate angular position of the the wind indicator relative to the housing there is utilized contactless sensing means working by opto-electrical or inductive principles. The applications stretch from fixed installations on the ground for meteorological use over wind mills (wind turbines) to use on ships and off-shore installations. In the case of wind turbines the wind direction relative to the wing rotor is continuously registered in order that the control system of the wind turbine may keep the wings in a correct position for optimum performance and for avoiding harmful loads.

Known wind measuring devices for wind turbines are designed as units with integrated signal emitters that cannot be changed. If the device is destroyed by lightning the whole unit is scrapped and a new is put up. Different measuring and control systems in wind turbines also result in a different number of signal emitters is used in the devices, which makes different varieties of the devices necessary for fulfilling the need on the market. Furthermore, by checking the known devices in assembled state a measuring instrument has to be connected to the signal emitters in order that correct function of the signal emitters may be ascertained.

In EP A1 592.088 there is described a combined anemometer and wind vane device, where oppositely directed housing carry a set of wind cups and a wind vane, respectively, on respective shafts. The shafts are placed coaxially end to end, each carrying an indicating disc to be sensed optically by a common signal emitter placed in a passage in the side wall of the housing. The device may not readily be adapted for other signal systems, where there is used several signal indicators or emitters for each indicating disc. Repair or modification of this device requires disassembly of the whole combination device.

### EXPLANATION OF THE INVENTION

The special feature of the wind indicating device according to the invention is that the device comprises three passages for the signal emitters placed with mutual angular intervals of 90° measured with center at the axis of rotation of the shaft, and which are formed with through-going threaded holes, and where the housing is divided transversely to the axis in two parts joined by means of an annular thread in the wall of the housing.

Hereby it is possible without any further preparations to place one, two, or three signal emitters in the housing for sensing the rotational speed of the shaft or for registering the angular position of the shaft relatively to the housing. The same housing may thus be utilized both as an anemometer and as a wind vane. It is easy to repair or change the signal emitters, which are just screwed out of and into the housing. These and other parts inside the housing may easily be substituted or checked as the housing may be taken apart by means of the thread connection.

In a preferred embodiment according to the invention as indicated in claim 2 there is provided a cap with a skirt between the wind sensor and the housing. The skirt extends downwardly around a part of the housing, and alternately on the inside of the skirt and the outside of the housing opposite the cap there is provided annular ribs that each have an upward-facing, downwardly inclined surface. A such cap serves as protection under tough conditions for the upper bearing of the shaft closest to the wind sensor, especially in desert-like areas with sand drift. The annular ribs form a labyrinth that prevents sand and other particles from reaching the bearing, in that the particles are slowed down by the downwardly facing surfaces and run down the inclined upwardly facing surfaces.

For mounting of electric heating element the device according to the invention is preferred designed as indicated in claim 3. With the provision of additional one or two threaded holes that end blindly in the wall material of the housing, the heating elements may be screwed into these and the heat will be conducted to the other fixed or movable parts of the housing, whereby problems caused by cold weather, e.g. freezing of the rotatable parts, are avoided.

By a device according to the invention functioning as a wind vane it is necessary that the signal generating means in the device are correctly adjusted relative to the base. Both on wind mills and at other places this often requires some adjustment by the person making the installation or servicing the device. By the invention this adjusting operation is simplified or is rendered superfluous by the embodiment according to claim 4, where a side wall of the housing outwardly has a contact surface parallel with or perpendicular to a plane defined by the center axes of the two through-going threaded holes placed mutually oppositely the axis of rotation. The housing may thus be fixed in alignment with a surface having a controlled direction relative to the base that the angular deviation of the vane is measured from, and further adjustment is therefore unnecessary.

An electrical, preferably inductive signal emitter for use in connection with the wind indication device according to the invention has the peculiar feature, that the signal emitter has an external thread for mounting in the housing of the device, and that the signal emitter is provided with a light-emitting diode on the part projecting out of the housing. After the mounting it is therefore possible to see whether the signal emitter is functioning, since the diode gleams at the registration of the movements of the wind cups or wind vane. Thereby checking and error correction of the device is facilitated.

### THE DRAWING

Preferred embodiments according to the invention are described in more detail hereinafter with reference to the drawing, where
Fig. 1 shows a vertical section through the wind indicating device according to the invention for use as anemometer,
Fig. 2 shows a vertical section through a wind indicating device according to the invention for use as a wind vane, and
Fig. 3a-c show a bottom part of the housing of the wind indicating device as seen from the side, from the bottom, and as a section along the line C-C on Fig. 3a, respectively.

### DESCRIPTION OF EMBODIMENTS

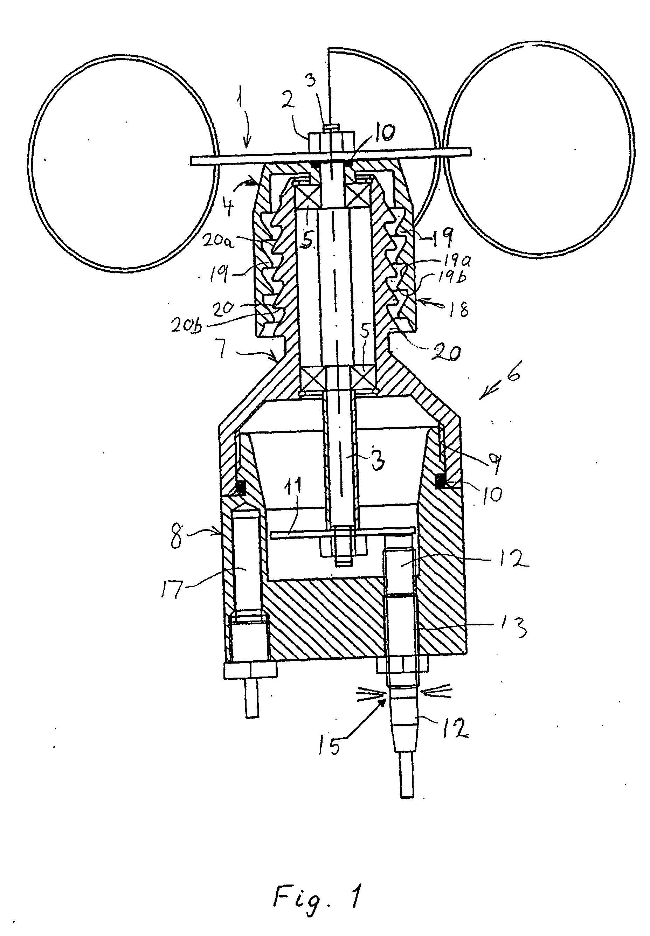

A first embodiment for a wind indicating device according to the invention as shown on Fig. 1 is provided with a set of wind cups on a rotor 1 fastened with a nut 2 to a shaft 3. The rotor 1 abuts on the top of a protective cap 4. The shaft 3 is suspended in bearings 5 inside a bottle-shaped housing 6 in two parts 7,8 having a mainly circular section. The housing 6 consist of a top part 7 and a bottom part 8 joined by a thread 9. Packings 10 at the thread 9 and the rotor 1 protect the interior of the device against intruding water and dirt. The housing 6 and the cap 4 are preferably made of brass for reasons of corrosion and manufacture, but of course other materials are possible, e.g. aluminum, iron containing alloys and synthetic materials.

The end of the shaft 3 inside the housing 6 is provided with a cam disc 11 of metal or a like signal generator of a known kind, which may have e.g. ten teeth, the speed of rotation of which may be read as impulses by an inductive sensor 12. Other kinds of sensors, for example based on photo-electric or lighting wire arrangements are possible within the scope of the invention. Up to three sensors 12 can be used. The sensor 12 is screwed with a thread 13 into a through-going hole 14 in the bottom part 8. If less than three holes 4 are used the remaining holes 14 are shut tightly with plastic caps. The sensor 12 is provided with a light-emitting diode 15 placed visibly outside the housing 6. The light-emitting diode 15 is connected to the electric system in the sensor 12 in such a way that an impulse from the sensor 12 results in a light flash from the diode 15. After the assembly and mounting of the device it may easily be detected whether the sensor 12 is intact and functions without disassembling the device.

In this embodiment the cap 4 has a skirt 18 extending downwards and surrounding a part of the top part 7 of the housing 6, which is shown in normal working position with the rotor 1 upwards. The skirt 18 is provided with ringshaped inwardly projecting ribs 19 having upwardly facing surfaces 19a that are inclined downwardly from the skirt 18 and with downwardly facing surfaces 19b extending horizontally or slightly inclined. On the top part 7 opposite to the skirt 18 there is formed similar ribs 20 extending annularly on the exterior of the part 7 with corresponding surfaces 20a,20b. The diameter of the innermost parts of the ribs 19 is slightly larger than the diameter of the outermost parts of the ribs 20, thereby forming a clearance between these parts of about 0.5 mm. Furthermore the ribs 19 and 20 are staggered so that a labyrinthic passage is created for an air flow from the lower part of the skirt 18 until the top of the housing 6 where the upper of the bearings 5 is situated, as shown on the drawing. The labyrinthic passage acts as a barrier against the ingress of sand and dust when these airborne particles on their way up several times hit the horizontal underside of the ribs 19,20. The particles are thereby slowed down and subsequently fall downwardly and out of the cap 4. The labyrinthic passage also restrain gusts of wind. The particles therefore do not reach further up under the skirt 18 than two or three ribs 19,20. Thereby it is avoided that particles, salt and water droplets reach the upper bearing 5 and cause wear and damage on the bearing.

In order to prevent freezing of the device in cold climate the housing 6 has two blind holes 16 that extend into solid material in the wall of the bottom part 8. The holes 16 have a screw thread for mounting electric heating elements 17. The heat of the elements 17 is conducted through the thread 9 to the top part 7, and the heat is further conducted by radiation and convection to the cap 4, so that the rotor 1 is held free from ice.

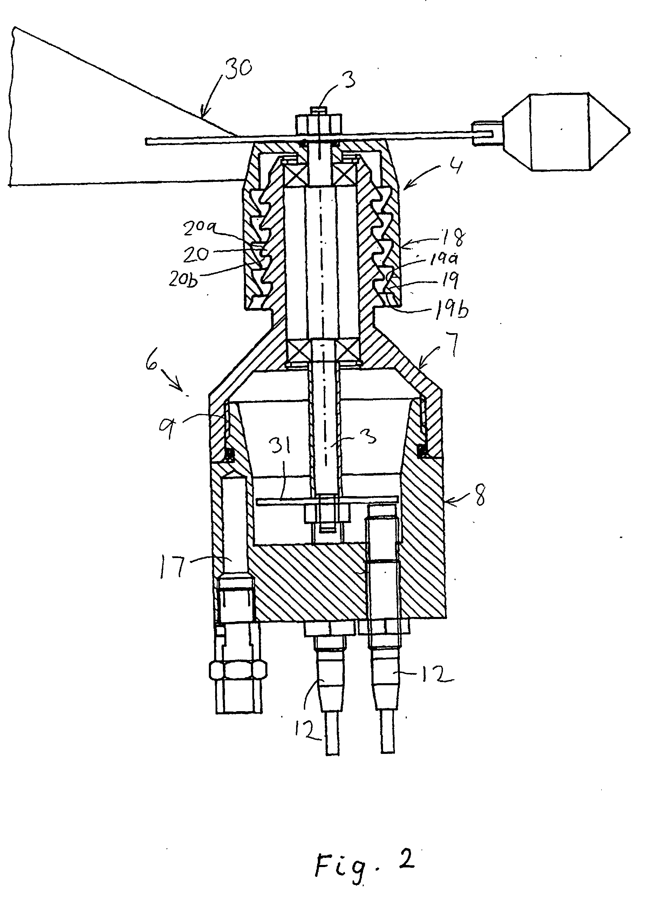

The same housing 6 may be utilized in a second embodiment according to the invention as shown on Fig. 2 which is depicting a wind vane with inductive registration of the wind direction, especially for use in wind mills and like installations to be held in a certain position relative to the wind direction. Most of the other components in this embodiment are the same as in the anemometer embodiment as the differences consist of a wind vane 30 fastened on the shaft 3 and on the internal end part of the shaft 3 a semicircular cam disc 31 covering an angle of 180°. Furthermore there is used two or three sensors 12 depending on the particular measuring system for registration of the angular displacement of the shaft 3 in relation to the housing 6. By these simple means the measuring system is able to decide whether the wind vane 30 has a proper position relative to the housing 6 which is fixed to the rotor housing of the wind turbine. If the position of the rotor housing of the turbine is not correct, the turning mechanism of the wind turbine will force the wings up against the wind until a proper signal is received from the measuring system.

In alternative wind vane embodiments according to the invention there may be used other kinds of systems for measuring or registrating the wind direction. For example there may be used a disc having a slight pitch like a screw thread along the periphery whereby it is possible with laser light from a combined light emitter and sensor 12 is possible to measure the distance from disc 31 to sensor 12 and then to determine the point on periphery of the disc 31 that is opposite the sensor 12, and hence the angular displacement of the wind vane.

The measuring systems and principles described in the above are wellknown and do not need any further elaboration.

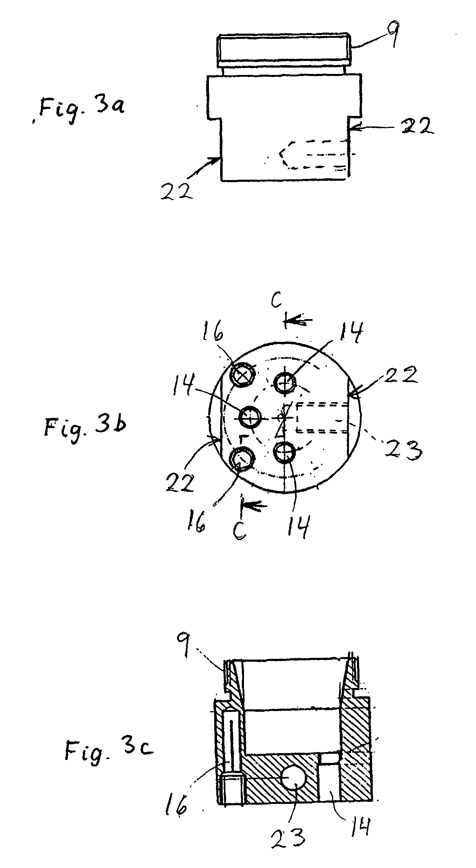

On Fig. 3a the bottom part 8 is seen from the side. Two plane areas 22 on the side of the part 8 may be used for determining the angular position of the housing in relation to a mounting frame. One of the areas 22 is provided with a threaded hole 23 for fastening the housing to the frame with a screw, see also Fig. 3c. The areas 22 are milled parallelly with a plane determined by the center axes of two holes 14 for the sensors 12 placed at mutually opposite positions relative to the axis of revolution of the shaft 3. Thereby it is easy to place the housing 6 in a well-defined direction in relation to a mounting frame. This renders adjusting of the housing 6 of a wind vane superfluous when used on a wind mill or a ship.

The position of the through-going holes 14 is shown on Fig. 3b, the holes 14 being distributed over a semi-circle with the axis of revolution of the shaft 3 as center and an angle of 90° between the holes 14. More peripherally situated holes 16 for accommodating heating elements 17 are also shown.

By the invention it is possible to substitute defective sensors, to change the measuring system by exchanging sensors of one type with another type if they only have the same screw thread, to substitute cam discs in the housing, and to modify the device from anemometer to wind vane and vice versa. Thus it is easy to change sensors of PNP or NPN-type to the other kind.

The housing 6 and the cap 4 may be provided with corrosion protection coating for use in tropical areas. The wind indicating device according to the invention may typically be utilized on wind turbines, ships and off-shore installations, besides the usual meteorological applications.

## Claims

1. A device for indicating wind and comprising a stationary housing (6) which at one end has a wind sensor (1; 30) mounted on a rotatable shaft (3) extending into the housing (6) and provided with indicating means (11; 31) to interact with one or more signal emitters (12) for transmitting a signal to a sensing system outside the housing (6), thereby indicating the position, the movements, or the rotational speed of the wind sensor (1; 30) relative to the housing (6), and where the signal emitters (12) or wires for the emitters are passed into the end of the housing (6) opposite to the wind sensor (1; 30), **characterized in that** the device comprises three passages (14) for the signal emitters placed with mutual angular intervals of 90° measured with center at the axis of rotation of the shaft, and which are formed with through-going threaded holes (14), and where the housing (6) is divided transversely to the axis in two parts joined by means of an annular screw thread (9) in the wall of the housing.

2. The device according to claim 1, wherein between the wind sensor (1; 30) and the housing (6) there is provided a cap (4) with a skirt (18) that extends downwardly around a part of the housing (6), and where on the inside of the skirt (18) and the outside of the housing opposite the cap (4) there is alternately provided a number of annular ribs (19,20) that each have an upward-facing, downwardly inclined surface (19a,20a).

3. The device according to claim 1 or 2, wherein the housing (6) comprises further one or two screw threaded holes (16) ending blindly in the solid wall of the housing (6).

4. The device according to any of the preceding claims, wherein a side wall of the housing outwardly has at least one contact surface (22) parallel with or perpendicular to a plane defined by the center axes of two through-going threaded holes (14) placed mutually oppositely in relation to the axis of revolution.

5. The device according to any of the preceding claims, comprising an electric signal emitter (12) which has an external thread for mounting in the housing (6) of the device, and which is provided with a light-emitting diode (15) on the part projecting out of the housing (6).

## Patentansprüche

1. Vorrichtung zur Windanzeige, die ein stationäres Gehäuse (6) umfaßt, welches am einen Ende einen Windsensor (1; 30) hat, der an einer sich in das Gehäuse (6) erstreckenden drehbaren Welle (3) befestigt ist und mit Anzeigemitteln (11; 31) zum Zusammenwirken mit einem oder mehreren Signalsendern (12) zum Übertragen eines Signals an eine außerhalb des Gehäuses (6) angeordnete Abtastanordnung versehen ist, um auf diese Weise die Position, die Bewegungen oder die Drehzahl des Windsensors (1; 30) relativ zum Gehäuse (6) anzuzeigen, und wobei die Signalsender (12) oder die Drähte der Sender in das dem Windsensor (1; 30) entgegengesetzte Ende des Gehäuses (6) eingerührt sind, **dadurch gekennzeichnet, dass** die Vorrichtung drei Durchlässe (14) für die Signalsender aufweist, die in wechselnden Winkelintervallen von 90° gemessen von der Mitte der Drehachse der Welle angeordnet und die mit Durchgangsbohrungen (14) mit Gewinde ausgebildet sind, und wobei das Gehäuse (6) quer zur Achse in zwei Teile unterteilt ist, welche durch ein ringförmiges Schraubgewinde (9) in der Wandung des Gehäuses miteinander verbunden sind.

2. Vorrichtung nach Anspruch 1, wobei zwischen dem Windsensor (1; 30) und dem Gehäuse (6) ein Aufsatz (4) mit einem Rand (18), welcher sich nach unten um einen Teil des Gehäuses (6) herum erstreckt, vorgesehen ist, und wobei an der Innenseite des Randes (18) und an der Außenseite des Gehäuses gegenüber dem Aufsatz (4) wechselweise mehrere ringförmige Rippen (19, 20) vorgesehen sind, von denen jede eine nach oben gewandte, abwärts geneigte Oberfläche (19a, 20a) aufweist.

3. Vorrichtung nach Anspruch 1 oder 2, wobei das Gehäuse (6) ferner eine oder zwei Bohrungen (16) mit Gewinde aufweist, die blind in der massiven Wandung des Gehäuses (6) enden.

4. Vorrichtung nach einem der vorhergehenden Ansprüche, wobei eine Seitenwand des Gehäuses (6) außen mindestens eine Kontaktfläche (22) hat, die parallel oder rechtwinklig zu einer Ebene verläuft, welche durch die Mittelachsen von zwei der Durchgangsbohrungen (14) mit Gewinde, die bezüglich der Drehachse einander gegenüber angeordnet sind, definiert ist.

5. Vorrichtung nach einem der vorhergehenden Ansprüche, die einen Signalsender (12) aufweist, der ein Außengewinde zum Befestigen im Gehäuse (6) der Vorrichtung hat und mit einer Licht emittierenden Diode (15) an dem aus dem Gehäuse (6) zeigenden Abschnitt versehen ist.

## Revendications

1. Dispositif pour indiquer le vent et comprenant un boîtier fixe (6) qui possède, à une extrémité, un capteur de vent (1; 30) monté sur un arbre rotatif (3) s'étendant dans le boîtier (6) et pourvu de moyens d'indication (11, 31) pour coopérer avec un ou plusieurs émetteurs de signaux (12) pour transmettre un signal à un système de détection à l'extérieur du boîtier (6), indiquant ainsi la position, les mouvements, ou la vitesse de rotation du capteur de vent (1; 30) par rapport au boîtier (6), et selon lequel les émetteurs de signaux (12) ou les fils métalliques pour les émetteurs passent dans l'extrémité du boîtier (6) en regard du capteur de vent (1 ; 30), **caractérisé en ce que** le dispositif comprend trois passages (14) pour les émetteurs de signaux placés selon des intervalles angulaires mutuels de 90° mesurés par rapport au centre au niveau de l'axe de rotation de l'arbre, et qui sont formés avec des trous traversants filetés (14), et où le boîtier (6) est divisé dans le sens transversal par rapport à l'axe en deux parties assemblées au moyen d'un filetage de vis annulaire (9) dans la paroi du boîtier.

2. Dispositif selon la revendication 1, selon lequel entre le capteur de vent (1 ; 30) et le boîtier (6), un bouchon (4) est monté avec une jupe (18) s'étendant vers le bas autour d'une partie du boîtier (6) et sur l'intérieur de laquelle jupe (18) et l'extérieur du boîtier en regard du bouchon (4) un certain nombre de nervures annulaires (19, 20) sont ménagées qui comprennent chacune une surface orientée vers le haut, inclinée vers le bas (19a, 20a).

3. Dispositif selon la revendication 1 ou 2, selon lequel le boîtier (6) comprend en outre un ou deux trous filetés (16) de vis, borgnes, ménagés dans la paroi pleine du boîtier (6).

4. Dispositif selon l'une quelconque des revendications précédentes, selon lequel une paroi latérale du boîtier vers l'extérieur possède au moins une surface de contact (22) parallèle à ou perpendiculaire à un plan défini par les axes centraux des deux trous filetés traversants (14) placés de manière opposée par rapport à l'axe de rotation.

5. Dispositif selon l'une quelconque des revendications précédentes, comprenant un émetteur de signaux électriques (12) qui possède un filetage externe pour assurer le montage dans le boîtier (6) du dispositif, et qui est pourvu d'une diode électroluminescente (15) sur la partie se projetant hors du boîtier (6).
